# EUROPÄISCHE PATENTANMELDUNG

(11) **EP 1 798 362 A2**
(43) Veröffentlichungstag der Anmeldung: **20.06.2007**
(21) Anmeldenummer: 06026004.9
(22) Anmeldetag: 15.12.2006
(51) Int. Cl.: E06B 1/60

(54) **Befestigung eines Rahmenprofils eines Tür- oder Fensterrahmens in einer Maueröffnung eines Bauwerkes**

(30) Priorität: 16.12.2005 AT 20122005
(71) Anmelder: Fuchs, Sebastian, 3341 Ybbsitz (AT)
(72) Erfinder: Fuchs, Sebastian, 3341 Ybbsitz (AT)

(57) **Zusammenfassung**

Die Erfindung betrifft die Befestigung eines Rahmenprofils eines Fensters oder einer Tür an einem Unterbau, wobei eine mit einem Werkzeugeingriff versehene Schraube durch eine Bohrung in dem zu verankernden Rahmenprofil verläuft und mit ihrem Einschraubbereich im Unterbau verankert ist. Erfindungsgemäß ist vorgesehen, dass die Schraube (1) in jenem Bereich, mit welchem sie am Rahmenprofil (2) anliegen kann, mit einer kleineren Federkonstante als der anliegende Bereich des Rahmenprofils (2) verformbar bzw. verschiebbar ist, und dass die maximale Abmessung dieses elastischen Bewegungsbereiches des Schraube größer ist als jene des anliegenden Bereiches des Rahmenprofils.

## Beschreibung

Die Erfindung betrifft die Befestigung eines Rahmenprofils eines Tür- oder ein Fensterrahmens in einer Maueröffnung eines Bauwerkes.

DE 200 18 425 U1 betrifft eine dafür vorgesehene Schraube. In dem am Hohlprofil anliegenden Längenbereich der Schraube ist diese mit über den Umfang umlaufenden Stegen mit rampenartiger Querschnittsform versehen. Beim Eindrehen der Schraube gleiten diese Stege durch die Bohrungen im Hohlprofil, beim Herausdrehen kommen die steileren Flanken der Stege am Hohlprofil zum Anliegen, und nehmen das Hohlprofil mit. Damit wird eine Verstellfunktion erreicht.

Nachteilig bei dieser Erfindung ist, dass beim Eindrehen der Schraube das Hohlprofil im Bohrungsbereich schädigend verformt wird, dass die Anlageflächen der bundartigen Stege am Bohrungsrand der Profilwand sehr klein sind, und dass im Normalfall nur eine Wand des Hohlprofils passend an einem Bund der Schraube anliegt. Die Schraube kann nicht ohne Beschädigung des Hohlprofils demontiert werden.

DE 299 08 054 U1 zeigt die justierbare Befestigung eines Hohlprofils an einem Bauwerk. Dabei wird eine Spannhülse, an welcher das Hohlprofil an dem Bauwerk abgestützt ist, axial durch einen Bolzen durchdrungen, welcher in einer Bohrung im Bauwerk verankert ist, und mit einer gummielastischen Umhüllung an der Innenmantelfläche der Gewindehülse reibschlüssig anliegt. Die Verstellung erfolgt durch Drehen, der über ein Gewinde mit dem Hohlprofil verbundenen Spannhülse. Der Bolzen bildet lediglich eine Sicherung gegen Bewegung des Hohlprofils in der zur Achse der Spannhülse normal liegenden Ebene. Nachteilig an dieser Befestigungsmethode ist vor allem der hohe erforderliche Material- und Arbeitsaufwand.

DE 20 2004 004 893 U1 betrifft eine Schraube zur Verankerung eines mit einem verstärkenden Metallprofil versehenen Kunststoffprofils an einem Unterbau. In dem im Hohlprofil verlaufenden Längenbereich der Schraube ist diese mit einem über den Umfang umlaufenden Steg mit rampenartiger Querschnittsform versehen. Beim Eindrehen der Schraube gleitet dieser Steg durch eine Bohrung im Hohlprofil, beim Herausdrehen kommt seine steilere Flanke am Hohlprofil zum Anliegen. Damit wird eine Verstellfunktion erreicht. Die Schraube kann in dem Bereich zwischen umlaufenden Steg und

Schraubenkopf mit einer Kunststoffhülse umgeben sein, welche an der, bzw. den sie umgebenden Bohrungen im Hohlprofil auf Reibschluss anliegt, und somit eine bessere Haltewirkung und Spielfreiheit bewirkt.

Nachteile an dieser Bauweise sind, dass das Hohlprofil im Bohrungsbereich beschädigt wird, dass nicht alle durchdrungenen Wände des Hohlprofils Verstellkräfte aufnehmen, dass eine hohe Variantenvielfalt nötig ist, und dass keine beschädigungsfreie Demontage der Schraube aus dem Rahmen möglich ist.

Allen besprochenen Bauweisen gemeinsam ist der Nachteil, dass es sehr leicht zu Beschädigungen des derart befestigten Fenster- oder Türrahmens kommen kann, wenn Maßänderungen durch Wärmeausdehnung auftreten, oder wenn Erschütterungen am Gebäude auftreten.

Von diesem Stand der Technik ausgehend hat sich der Erfinder die Aufgabe gestellt, die Befestigung der Rahmenprofile einer Tür oder eines Fenster in einer Maueröffnung eines Bauwerkes dahingehend zu verbessern, dass relative Maß- oder Lageänderungen zwischen den aneinander zu befestigenden Teilen, welche beispielsweise durch Temperaturschwankungen oder Erschütterungen auftreten können, zu keinen Beschädigungen führen. Zumindest in einer vorteilhaften Weiterentwicklung soll die Befestigung derart ausführbar sein, dass das entsprechend befestigte Rahmenprofil in seiner Lage am Bauwerk justierbar ist, das Rahmenprofil durch die Befestigung nicht beschädigt wird und die Befestigung beschädigungsfrei demontierbar ist. Die erforderlichen Befestigungsteile sollen für möglichst viele verschiedene Rahmenprofilformen passen.

Zur Lösung der Aufgabe wird - wie bei vorbekannten Bauweisen auch - eine Schraube verwendet, welche sich durch das Rahmenprofil hindurch in das Mauerwerk erstreckt und darin mit einem Einschraubendbereich verankert ist. Erfindungsgemäß ist vorgesehen, dass die Schraube in einem ausreichend weiten Maßbereich im elastischen Bereich weicher verformbar ist als das zu befestigende Rahmenprofil. Erreicht wird dies im wesentlichen durch zwei Maßnahmen, welche gemeinsam oder einzeln angewandt werden können:
Erstens kann ein langer Bereich des Schaftes der Schraube zwischen dem Mauerwerk und dem Rahmenprofil frei biegbar gehalten werden.
Zweitens kann der Schaft der Schraube in jenem Längsbereich welcher an dem zu befestigenden Rahmenprofil zum Anliegen kommen kann, durch einen elastisch verformbaren Kunststoffteil umfasst werden, wobei die Federkonstante dieses Kunststoffteils niedriger ist als die Federkonstante des daran zum Anliegen kommenden Materials des Rahmenprofils.
   In einer vorteilhaften Ausführungsform ist der Kunststoffteil an seiner Mantelfläche mit sägezahnartigen Erhebungen versehen, welche an den die Bohrung umgebenden Wandbereichen des zu befestigenden Rahmenprofils anliegen.
   In einer vorteilhaften Weiterentwicklung ist der Kunststoffteil mit in Längsrichtung verlaufenden Stegen versehen, welche an der Mantelfläche der Bohrung in dem zu befestigenden Rahmenprofil anliegen, und dadurch den Kunststoffteil und mit ihm die Schraube in der Bohrung mittig zentrieren.
   Im Normalfall ist die Schraube an dem, dem Einschraubendbereich gegenüberliegenden Ende mit einem Kopf mit einem Werkzeugeingriff versehen. Es wäre aber auch möglich, sie in jenem Längsbereich des Schaftes, welcher zwischen dem Hohlprofil und dem Mauerwerk verläuft, mit einem Werkzeugeingriff auszustatten.

Die Erfindung wird an Hand der Zeichnungen anschaulicher.
Fig. 1: zeigt ein erfindungsgemäß verankertes Rahmenprofil in einer vertikalen Schnittansicht.
Fig. 2: zeigt ebenfalls ein erfindungsgemäß verankertes Rahmenprofil in einer vertikalen Schnittansicht. Gegenüber der Anordnung von Fig. 1 ist die Schraube um eine Achteldrehung verdreht gezeigt und das angrenzende Mauerwerk ist unterschiedlich ausgeführt.

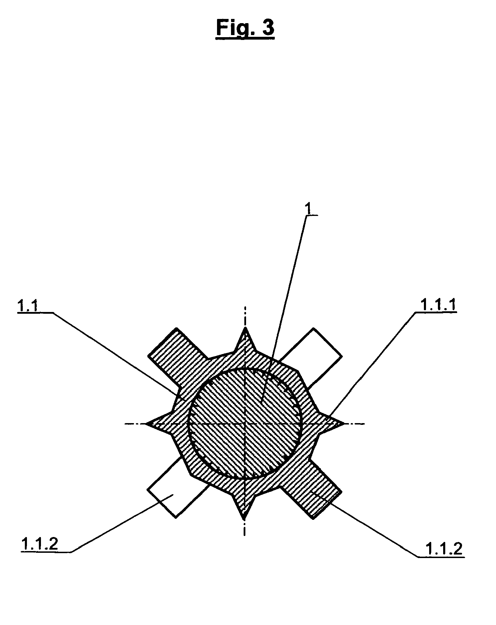

Fig. 3: zeigt die Schnittansicht entsprechend der Ebene "A-A" von Fig. 2.

Eine Schraube 1 zur Verankerung und Justierung eines Rahmenprofils 2 an einem Unterbau 3 besteht aus einem zylindrischen Schaft an dessen Einschraubendbereich ein Gewinde und am anderen Ende ein Kopf mit einem Werkzeugeingriff ausgebildet ist. Weiters ist der zylindrische Schaft am Großteil seiner Länge mit einem Kunststoffteil 1.1 umspritzt, der mehrere in Längsrichtung der Schraube verlaufende Stege 1.1.1 und mehrere sägezahnartige Erhebungen 1.1.2 aufweist. Der Kunststoffteil 1.1 ist fest mit dem zylindrischen Schaft 1.1 der Schraube 1 verbunden.

Wenn nun die Schraube 1 nach dem Vorbohren des Rahmenprofils 2 und des Unterbaues 3 in das Rahmenprofil 2 eingeschraubt wird, gelangt die Schraube mit dem Kunststoffteil 1.1 durch das Rahmenprofil 2 bis der Bund des Kunststoffteiles 1.1.3 am Rahmenprofil 2 anliegt.
Beim Einschrauben werden die in Längsrichtung der Schraube 1 angeordneten Stege 1.1.1 und die in Umfangs- und Längsrichtung der Schraube 1 in einem Abstand zueinander angeordneten sägezahnartigen Erhebungen 1.1.2 elastisch verformt. Auf Grund dieser elastischen Verformbarkeit der sägezahnartigen Erhebungen bleibt das Rahmenprofil 2 an den Rändern der durch die Schraube 1 durchdrungenen Bohrung unverformt. Das Material des Kunststoffteiles 1.1 ist so gewählt, dass es beim Einschraubvorgang zwar elastisch verformt wird, aber ansonsten keinen Schaden nimmt.
Durch weiteres Eindrehen wird der Abstand des Rahmenprofils 2 zum Unterbau 3 verringert. Er kann so eingestellt werden, dass das Rahmenprofil 2 spannungsfrei in der optimalen Position verankert ist, und um diese Position in einem kleinen Bereich unter elastischer Verformung vor allem des Kunststoffteiles 1.1 beweglich ist.
Wenn beim Einschraubvorgang das Rahmenprofil 2 zu nahe an den Unterbau 3 bewegt wurde, kann es durch Herausdrehen der Schraube 1 wieder vom Unterbau weg bewegt, und somit passend einjustiert werden. Beim Herausdrehen der Schraube 1 aus dem Unterbau wird das Rahmenprofil in Achsrichtung der Schraube mitbewegt, da sich die sägezahnartigen Erhebungen 1.1.2 am Rahmenprofil 2 widerhakenartig verhaken.
Wenn die Schraube 1 auch aus dem Rahmenprofil 2 herausgedreht werden soll, muss das Rahmenprofil beim Vorgang des Herausdrehens der Schraube durch eine Verspreizung gegen Bewegung vom Unterbau weg, gehalten werden.
Die Gesamtfunktion des Kunststoffteils 1.1 wird im Wesentlichen durch die drei unterschiedliche Funktionsteile bzw. Gruppen von Funktionsteilen Bund 1.1.3, Stege 1.1.1 und sägezahnartige Erhebungen 1.1.2 bestimmt:
Der zwischen Rahmenprofil 2 und Schraubenkopf liegende Bund 1.1.3 bildet eine relativ große, elastische Anschlagfläche des Rahmenprofils 2 gegen Bewegung in Axialrichtung der Schraube 1 vom Unterbau 3 weg.
Die Stege 1.1.1 bilden längliche Erhebungen, welche aus der Mantelfläche des Kunststoffteils 1.1 emporragen. Sie erstrecken sich in Axialrichtung dieser Mantelfläche und haben typischerweise eine dreieckförmige oder trapezförmige Querschnittsfläche. Sie liegen an der Mantelfläche der Bohrung im Rahmenprofil 2 unter elastischer Vorspannung an und tragen so zum Halt des Rahmenprofils 2 in Querrichtung zur Schraube 1 sowohl beim Einschraubvorgang als auch in fertig montiertem Zustand bei. Sie zentrieren die Schraube 1 in der Bohrung im Rahmenprofil 2.
Die sägezahnartigen Erhebungen 1.1.2 ragen ebenfalls aus der Mantelfläche des Kunststoffteiles 1.1 empor. Sowohl in Umfangsrichtung, als auch in Axialrichtung der Mantelfläche sind sie in einem Abstandsraster zueinander angeordnet. Im dargestellten Beispiel sind am Umfang benachbarte Reihen von axial hintereinander angeordneten sägezahnartigen Erhebungen 1.1.2 um ein halbes axiales Rastermaß in Axialrichtung gegeneinander versetzt. Es sind vier, zueinander am Umfang um jeweils einen Viertelkreis versetzt angeordnete derartige Reihen vorhanden. Diese Anordnung der sägezahnartigen Erhebungen 1.1.2 wurde gewählt, um trotz eines relativ großen Rastermaßes sehr feine Einrastabstände zu erreichen. Somit kommt es nach jeder Wand des Rahmenprofils 2, unabhängig von deren Dicke, sehr zuverlässig zum Einrasten. D.h. nahezu die ganze Bandbreite von möglichen Rahmenprofilen 2 wird abgedeckt. Somit findet man mit einer kleinen Variantenvielfalt an Schrauben 1 das Auslangen. Dadurch, dass die sägezahnartigen Erhebungen in axial verlaufenden Reihen verlaufen, wobei sich die Umfangsrichtung liegenden Breiten benachbarter Reihen nicht überlappen, sind diese Reihen einfach durch Spritzgießen herstellbar.
Die der Schraubenspitze zugewandte Flanke der sägezahnartigen Erhebungen 1.1.2 ist zur Achse der Schraube 1 in einem spitzeren Winkel angeordnet, als die dem Schraubenkopf zugewandte Flanke. Dadurch wird in dem Sinn eine Widerhakenfunktion erreicht, dass die sägezahnartigen Erhebungen 1.1.2 beim Einschrauben der Schraube 1 durch die Bohrung im Rahmenprofil 2 durchgleiten, beim Ausschrauben hingegen an den Rändern der Bohrung verhaken.
Jene sägezahnartigen Erhebungen 1.1.2, die sich nach dem Einschraubvorgang in einer Wand des Rahmenprofils 2 befinden, ergänzen zu den Stegen 1.1.1 den Halt des Rahmenprofils 2 in Querrichtung zur Schraube 1.
Die beschriebenen Funktionsteile des Kunststoffteils 1.1 liegen unter elastischer Verformbarkeit und Vorspannung am Rahmenprofil 2 an. Die elastische Verformbarkeit des Kunststoffteils 1.1 ist weicher, also mit geringerer Federkonstante, als die des Rahmenprofils 2. Durch die damit gegebene Beweglichkeit des Rahmenprofils 2 gegenüber dem Untergrund 3 wird erreicht, dass es im Fall von sich ändernden Temperaturen zu keinen schädlichen Wärmespannungen kommt, dass auch bei Erschütterungen des Gebäudes, wie beispielsweise kleineren Erdbeben keine Beschädigungen hervorgerufen werden und dass das Rahmenprofil 2 am Untergrund 3 dennoch immer wackelfrei fixiert ist.
Durch die elastische Verformbarkeit des Kunststoffteils 1.1 können auch geringe Ungenauigkeiten des Vorbohrens ausgeglichen werden.
Sollte es erforderlich sein die Schraube 1 aus dem Rahmenprofil 2 zu entfernen, führt dies nicht zur Beschädigung des Rahmenprofils 2, sondern maximal zur Beschädigung der Schraube 1.
Typischerweise ist die Schraube 1 aus Stahl gefertigt. Das Material für den Kunststoffteil ist vorzugsweise ein Elastomer.
Der Kunststoffteil wird vorzugsweise durch Spritzgießen auf die Schraube aufgebracht, obwohl beispielsweise auch vorstellbar ist, dass er aus geteilt vorgefertigten Hälften auf den Schaft aufklebt oder aufgesteckt wird.
Damit der Kunststoffteil 1.1 an der Schraube 1 formschlüssig gegen Verrutschen gehalten wird, sollte die Oberfläche der Schraube 1 im umspritzten Bereich nicht einfach kreiszylinderflächenförmig ausgebildet sein, sondern mit davon abweichenden Erhebungen oder Vertiefungen, welche nicht ausschließlich in Umfangsrichtung oder Axialrichtung ausgerichtet sind. Beispielsweise kann die Schraube dort mit einer Rändelung, also mit einem Muster aus gegenläufige schraubenlinienartig verlaufenden Nuten versehen sein.
Die Herstellkosten der erfindungsgemäßen Schraube sind zwar höher als die einer herkömmlichen Schraube für den gleichen Anwendungszweck, aber durch die beschriebenen Vorteile sowohl während des Montagevorganges, als auch während der Anwendungszeit wird dieser partielle Kostennachteil vielfach aufgewogen.

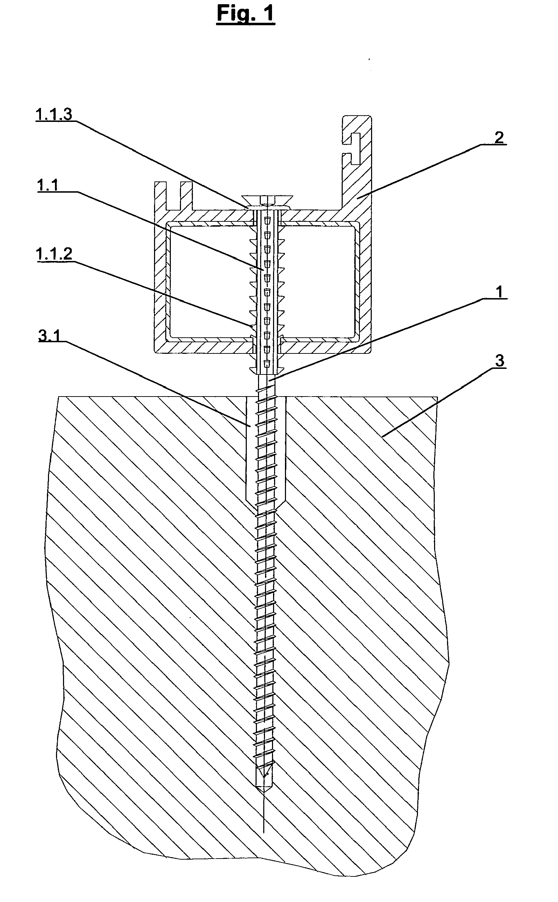

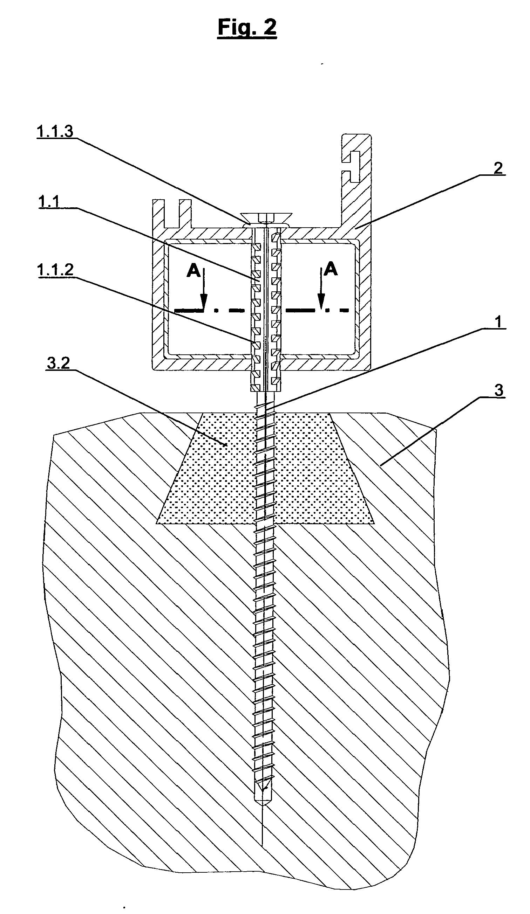

Bei der Befestigung entsprechend Fig. 1 ist die Bohrung im Untergrund 3 derart als Stufenbohrung ausgebildet, dass der seichtere Bereich der Bohrung mit einem größeren Durchmesser ausgeführt ist, als der Außendurchmesser der Schraube 1 in diesem Längsbereich. Gegenüber einer Bohrung, bei der Schaft der Schraube bis an die Öffnung hin anliegt, erhält das Rahmenprofil 2 einen größeren elastischen Bewegungsspielraum in der zur Schraubenachse normal liegenden Ebene, da der Schaft der Schraube damit einen langen freien Biegebereich erhält. Der Bereich zwischen Mauerwerk und Rahmenprofil wird im Normalfall in einem späteren Arbeitsschritt mit einem weichelastischen, thermisch isolierenden Dämmstoff ausgeschäumt. Die dafür üblichen Stoffe sind so weich, dass die durch sie bewirkte Einschränkung der Biegefähigkeit des Schaftes der Schraube vernachlässigt werden kann. Es liegt im Übrigen im Bereich des normalen fachmännischen Handelns eines Konstrukteurs, den Durchmesser des Schaftes der Schraube und die freie Länge so auszulegen, dass die Federkonstante der elastischen Biegung der Schraube genügend klein und der elastische Verformungsbereich genügend groß ist, damit das Hohlprofil bestimmungsgemäß ausreichend weichelastisch beweglich gehalten wird.
Der gleiche Gewinn an elastischer Beweglichkeit wird auch mit der Bauweise entsprechend Fig. 2 erreicht. Dabei ist an der Projektionsfläche des Rahmenprofils 2 auf den Untergrund 3 eine Nut in den Untergrund 3 geschnitten, welche mit einem Streifen 3.2 aus weichelastischen, thermisch isolierenden Dämmstoff ausgefüllt ist. Später wird auch der Bereich zwischen dem Rahmenprofil und dem Untergrund mit einem thermisch isolierenden Dämmstoff ausgefüllt. Durch diese Bauweise wird bei Befestigung eines Fensterrahmens der Verlust an thermisch wirksamer Mauerstärke im Bereich des verglichen mit der Mauer relativ dünnen Fensterrahmens kompensiert. Es ist vorteilhaft die Nut im Untergrund mit einem sich nach innen hin erweiternden Querschnittsflächenbereich auszuführen, da damit erreicht wird, dass der eingelegte Dämmstoffstreifen nicht herausfallen kann. Idealerweise wird die Nut nicht an der Baustelle geschnitten, sondern es werden schon Ziegel für die Maueröffnung industriell vorgefertigt. Diese Ziegel können dann auch schon mit einem Isolierstreifen versehen sein.

Die Erfindung ist dann ganz besonders vorteilhaft anzuwenden, wenn das zu verankemde Rahmenprofil 2 ein Hohlprofil ist.

## Patentansprüche

1. Befestigung eines Rahmenprofils eines Tür- oder Fensterrahmens in einer Maueröffnung eines Bauwerkes, wobei eine mit einem Werkzeugeingriff versehene Schraube durch eine Bohrung in dem zu verankernden Rahmenprofil verläuft und mit ihrem Einschraubbereich im Unterbau verankert ist, **dadurch gekennzeichnet, dass** die Schraube (1) in jenem Bereich mit welchem sie am Rahmenprofil (2) anliegen kann mit einer kleineren Federkonstante als der anliegende Bereich des Rahmenprofils (2) verformbar bzw. verschiebbar ist, und dass die maximale Abmessung dieses elastischen Bewegungsbereiches des Schraube größer ist als jene des anliegenden Bereiches des Rahmenprofils.

2. Befestigung nach Anspruch 1, **dadurch gekennzeichnet, dass** der elastische Bewegungsbereich mittels eines Kunststoffteils (1.1) erzielt wird, weicher die Mantelfläche der Schraube in dem durch das zu verankernde Rahmenprofil verlaufenden Längsbereich umfasst und welcher in den am Rahmenprofil (2) anliegenden Bereichen im elastischen Bereich weicher verformbar ist als das Rahmenprofil (2).

3. Befestigung nach Anspruch 2, **dadurch gekennzeichnet, dass** die Mantelfläche des Kunststoffteils (1.1) mit sägezahnartigen Erhebungen (1.1.2) versehen ist, deren der Schraubenspitze zugewandte Flanke zur Schraubenachse einen spitzeren Winkel einnimmt als die dem Schraubenkopf zugewandte Flanke.

4. Befestigung nach Anspruch 3, **dadurch gekennzeichnet, dass** die sägezahnartigen Erhebungen (1.1.2) in mehreren parallel zur Schraubenachse angeordneten Reihen hintereinander angeordnet sind, wobei am Schraubenumfang benachbart angeordnete Reihen axial zueinander um einen Teil des axialen Rastermaßes versetzt angeordnet sind.

5. Befestigung nach Anspruch 3 oder 4, **dadurch gekennzeichnet, dass** am Umfang der Mantelfläche des Kunststoffteils (1.1) vier Reihen von axial hintereinander angeordneten sägezahnartigen Erhebungen (1.1.2) angeordnet sind.

6. Befestigung nach einem der Ansprüche 2 bis 4, **dadurch gekennzeichnet, dass** aus der Mantelfläche des Kunststoffteils (1.1) Stege (1.1.1) emporragen, welche sich in Axialrichtung der Mantelfläche erstrecken und an der Mantelfläche der Bohrung im Rahmenprofil (2) unter elastischer Vorspannung anliegen.

7. Befestigung nach einem der Ansprüche 2 bis 6, **dadurch gekennzeichnet, dass** die Schraube an der dem Unterbau abgewandten Seite mit einem Kopf mit einem Werkzeugeingriff versehen ist und dass der Kunststoffteil (1.1) an seinem schraubenkopfseitigen Ende zu einem Bund (1.1.3) verbreitert ist, welcher zwischen dem Schraubenkopf und dem zu befestigen Rahmenprofil (2) angeordnet ist, und am Rahmenprofil (2) anliegt.

8. Befestigung nach einem der vorgenannten Ansprüche, **dadurch gekennzeichnet, dass** die Bohrung im Untergrund (3) als Stufenbohrung ausgeführt ist, wobei der seichtere Bereich der Bohrung mit einem Durchmesser ausgeführt ist, welcher größer ist als der Schraubendurchmesser in diesem Längsbereich.

9. Befestigung nach einem der vorgenannten Ansprüche, **dadurch gekennzeichnet, dass** der Untergrund (3) in jenem Teil der Projektionsfläche des Rahmenprofils (2) darauf, durch welchen die Schraube (1) verläuft, mit einer Nut versehen ist, in welche ein Streifen (3.2) aus einem weichelastischen, thermisch isolierenden Material eingesetzt ist.

10. Befestigung nach einem der vorgenannten Ansprüche, **dadurch gekennzeichnet, dass** das damit zu befestigende Rahmenprofil (2) ein Hohlprofil ist.
